# EUROPEAN PATENT APPLICATION

(11) **EP 1 109 104 A1**
(43) Date of publication of application: **20.06.2001**
(21) Application number: 99124948.3
(22) Date of filing: 14.12.1999
(51) Int. Cl.: G06F 17/21

(54) **Deleting unused templates**

(71) Applicant: SUN MICROSYSTEMS, INC., Palo Alto, California 94303 (US)
(72) Inventor: Löschky, Dieter, 22397 Hamburg (DE); Haberer, Bettina, 22763 Hamburg (DE)
(74) Representative: Betten & Resch

(57) **Abstract**

A computer generated document file (100) comprises content data (10) and template data (11, 15) including, for example, formatting information. The size of the document file (100) can be reduced by removing unused and/or duplicate template data (11, 15).

## Description

### FIELD OF THE INVENTION

The present invention relates to reducing the file size of a computer generated document file. In particular the present invention relates to reducing the file size of a document file comprising content data and template data.

### DESCRIPTION OF THE RELATED ART

The use of templates is common practice for the generation of a document on a computer. Such documents like e.g. text documents, graphics documents, presentation documents or HTML-documents contain user defined content data or dynamic data as well as template data from the used template like formatting data, stylesheets and the like. The combination of the content data with the template data forms the finished, formatted document which can be used for print-out, presentation or a web-page.

When a document is generated usually data objects of a plurality of sources are inputted or copied into the document file. In these cases not only the content data but also the template data, containing for example formatting information, are copied into other document file thus created. Over time a lot of template data may accumulate in the document file, which are no longer used, but increase the file size of the document file.

Moreover, for creating a new document often another document is used as a starting point, which also includes template data. These template data may be not necessary in the new document.

It is therefore an object of the present invention to reduce the file size of a document containing content data as well as template data.

### SUMMARY OF THE INVENTION

In accordance with the present invention the above problem has been solved by a method of reducing the file size of a document file comprising content data and template data, the method comprising removing unused and/or duplicate template data from the document file.

With the method according to the present invention the document file size can be reduced considerably. Although the cost of memory has dropped dramatically large document files may be inconvenient on mobile devices as laptops or palmtops and tend to increase data transfer times, e.g. over the internet. A reduced file size is particularly important for web-pages because download times can be reduced.

The step of removing unused and/or duplicate template data from the document file is preferably carried out after a user instruction which the user may enter in response to a request by the program.

Preferably further unused data referenced by removed unused template data are also removed in order to further reduce a document size.

The operation of removing multiple and/or unused template data can be carried out directly before saving the document file. The step of removing duplicate template data, however, may also be carried out after a new data object containing template data is imported or copied to the document file. Moreover, unused template data may be detected and removed immediately after content data is deleted.

The content data may include user definable content including text, graphics, spreadsheets or tables.

The template data may include formatting data like page, paragraph, object, character or frame style templates. The template data, however, may also include a background page containing, for example, a logo, address data or the like.

The document file may be any type of file including a HTML- or XML-document. The document file may be transferable over a data network as the internet.

A further implementation of the present invention provides a computer program for reducing the file size of a document file comprising content data and template data, the computer program having program code adapted for removing unused and/or duplicate template data from the document file.

A program code may be embodied in any form of a computer program product. A computer program product comprises a medium configured to store or transport computer readable code, or in which computer readable code may be embedded. Some example of computer program products are CD-ROM discs, ROM cards, floppy discs, magnetic tapes, computer hard drives, servers on a network and signals transmitted over a network representing computer readable program code.

A still further implementation of the invention provides an apparatus for reducing the file size of a document file comprising content data and template data stored on a storage medium, the apparatus comprising processing means for removing unused/or duplicate template data from the document file.

A still further implementation of the present application provides a document file comprising content data and template data having a reduced file size through carrying out the process of removing unused and/or duplicate template data.

A still further implementation of the invention provides a software tool for reducing the file size of a computer generated document file comprising content data and template data, wherein unused and/or duplicate template data are optionally removed from the document file.

The great advantage and utility of the present invention is that unused or duplicate template data which may contain formatting data, graphics or other memory space consuming elements are removed from the document file, thus reducing the overall data volume of the same. With the invention memory space and transfer time and costs can be saved. On the other hand, the present invention secures that no useful data is removed from document file.

The above mentioned and other features, utilities and advantages of the invention will be apparent from the following detailed description of preferred embodiments of the invention as illustrated in the accompanying drawings.

### BRIEF DESCRIPTION OF THE DRAWINGS

Figure 1 is a schematic illustration showing a document file comprising content data and template data.

Figure 2 is a schematic illustration of a page containing content data and an attached background page containing template data.

Figure 3 is a flow chart illustrating a first embodiment of the present invention.

Figure 4 is a flow chart illustrating a second embodiment of the present invention.

Figure 5 is a schematic illustration of a computer system to which the present invention may be applied.

Figure 6 is a schematic illustration of a client-server configuration to which the present invention may be applied.

### DETAILED DESCRIPTION OF PREFERRED EMBODIMENTS

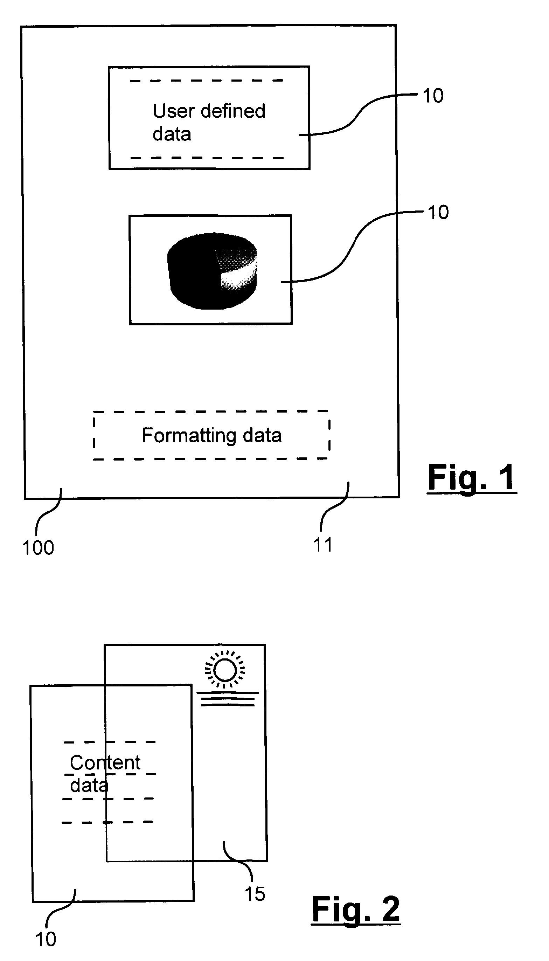

Figure 1 illustrates schematically a document file 100 comprising content data 10 and template data 11 as for example formatting data. The document file illustrated in Figure 1 may be for example a user document comprising, as content data, user defined data like text or graphics. The template data is any predetermined data related to the document for determining particular features of the document. The template data 11 may for example comprise formatting data like style templates defining paragraph, object, character or frame styles.

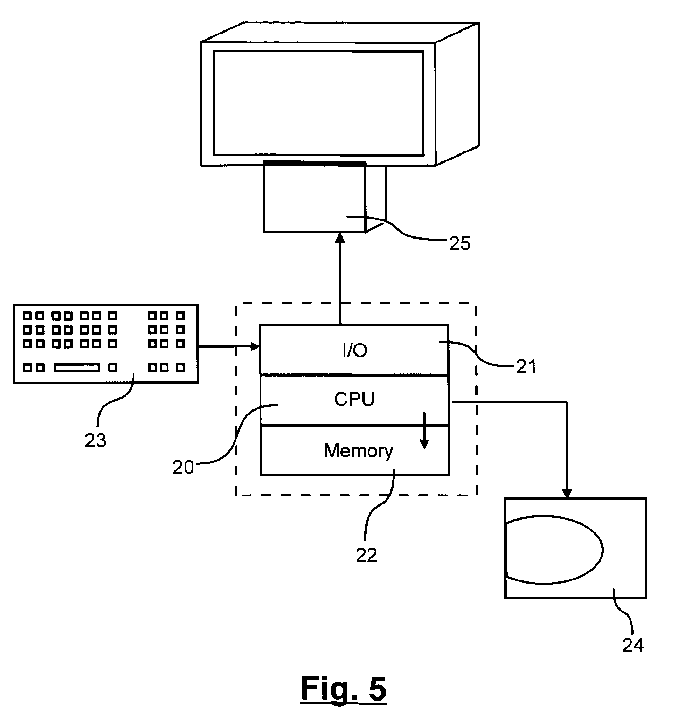

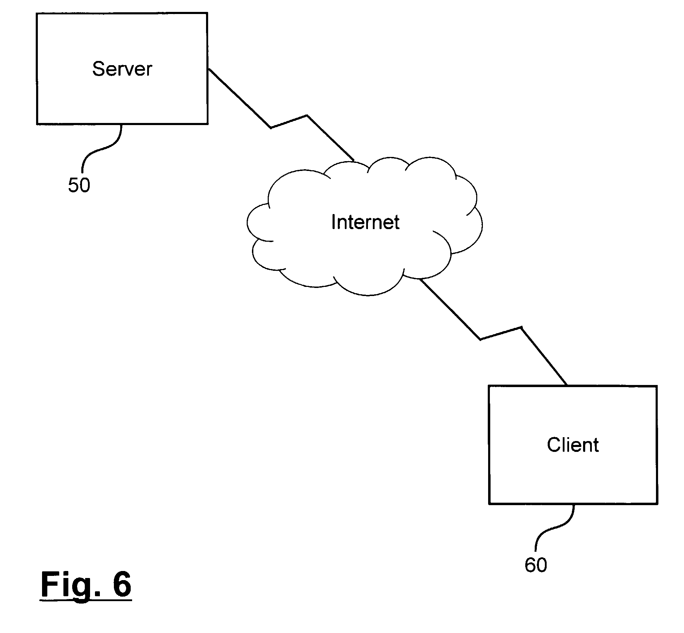

The user defined data may be input by means of a general purpose computer, like a personal computer or a work station as illustrated schematically in Figure 5. The computer may comprise a central processing unit CPU 20, an input output I/O unit 21, an internal memory 22 and an external memory 24. The user inputs the content data using standard input devices like a keyboard 23 or speech processing means (not illustrated). He or she may also import or copy data from other sources and paste the same into the document 100. The invention, however, may also be applied to a client-server configuration as illustrated in Figure 6. The document file may be stored on a server computer 50 accessible by a client device 60 through a browser application or the like.

Figure 2 shows a different example of a document containing content data and template data. The content data is contained in a foreground or dynamic page 10 and the template data is contained in a background page 15 which may also contain elements which are used identically in a plurality of dynamic pages like a logo, an address, an account number or a URL. Every background page contains an identifier which allows the identification of the same. The identifier may be a certain name, number, a combination of the two or any other appropriate means. Every dynamic page which refers to one or more background pages contains a reference field comprising the identifier of the employed background page. A combination of the dynamic page with the background page forms in this example a finished, formatted document object. An example of a page template is a background page containing formatting information and an empty dynamic page.

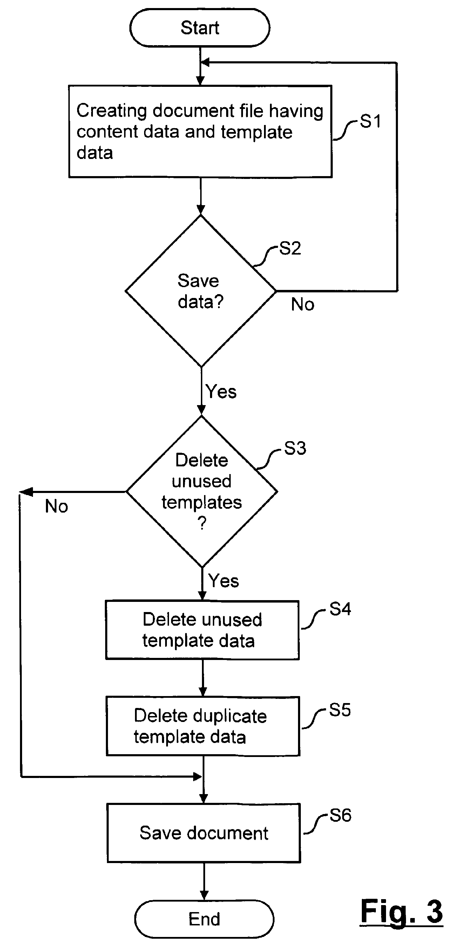

A first embodiment of the present invention is now discussed with reference to the flow chart of Figure 3. In step S1 a document file 100 containing content data and template data is created including, for example, importing of template data from other documents or sources. When the user transfers a data object from a different source to the document file the template data contained in the object is then also transferred to the document file.

In step S2 an instruction of the user to save the document file on a storage medium is awaited. If the user gives such an instruction the method proceeds to step S3 in which the user is asked whether or not he or she wishes to delete unused templates. If the user does not want to delete unused templates the program proceeds to method step S6 and the document including all template data is saved.

If the user, however, wishes to delete unused templates the program detects in the document file template data which are not used in the document. Unused template data are for example templates which are not employed directly or indirectly by the dynamic text data in the document. These unused templates can be detected through their identifiers which are not referred to in the content data. Then in step S5 it is checked whether or nor duplicate templates are contained in the document and these are subsequently removed from the document. The file size of the document can thus considerably be reduced. The program may have an additional function allowing the retrieval of deleted template data in other sources on a computer or network.

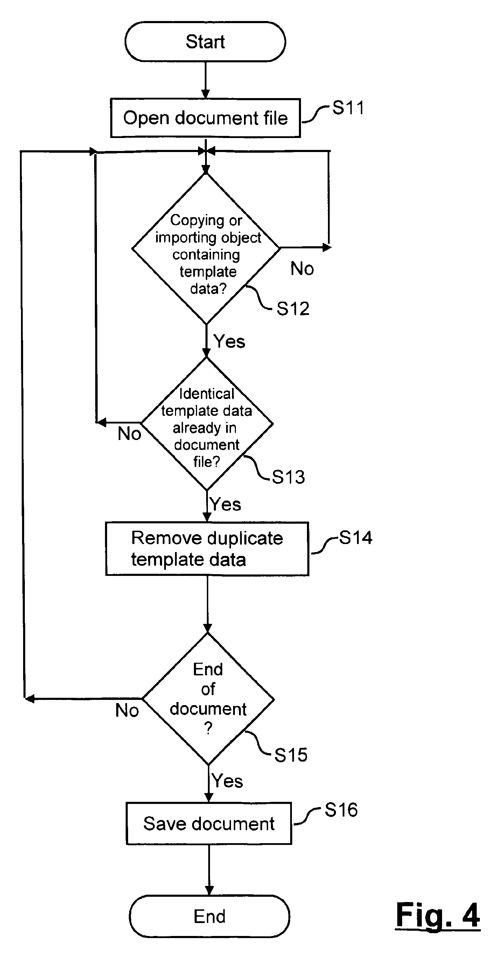

A second embodiment of the present invention is explained in connection with the flow chart of Figure 4. After opening the document 5 in step S11, a copying or importing operation of an object containing template data into the present document file is awaited. If the user carries out such copying or importing operation the program checks in step S13 whether or not identical template data are already contained in the document file. If this is the case, the copied or imported new template objects are deleted in step S14. The user can then continue the work to complete the document. Unnecessary template data will immediately be deleted. If the end of the document is reached in step S16 the document 100 is then saved in step S19.

With the invention it is possible to considerably reduce the file size of computer created documents by removing unused formatting or template data. The reduction of the file size is particularly important in the case of web-pages, the download time of which can be reduced.

While the invention has been particularly shown with reference to a preferred embodiment thereof, it will be understood by those skilled in the art that various other changes in the form and details may be made therein without departing from the spirit and scope of the invention.

## Claims

1. A method of reducing the file size of a document file (100) comprising content data (10) and template data (11, 15), the method comprising removing unused and/or duplicate template data (11, 15) from the document file (100).

2. The method of claim 1, wherein the step of removing the unused and/or duplicate of template data (11, 15) is carried out dependent on a user instruction.

3. The method of claim 1, comprising, when the unused and/or duplicate template data (11, 15) are removed from the document file, also removing any further unused data relating to the unused template data.

4. The method of claim 1, comprising, when an object containing template data is imported or copied into the document file, removing the imported or copied template data from the document file if identical template data is already contained in the document file.

5. The method of claim 1, comprising, when content data (10) is removed from the document file, removing template data (11, 15) relating to the deleted content data (10), if the template data are not employed by any other content data contained in the document file.

6. The method of claim 1, wherein the content data consists of user definable data including text, graphics, tables or a data base.

7. The method of claim 1, wherein the document file (100) is transferable over a data network.

8. The method of claim 1, wherein the template data includes formatting data defining a paragraph, object, character or frame style.

9. The method of claim 1, wherein the template data includes a background page (15).

10. A computer program for reducing the file size of a document file (100) comprising content data (10) and template data (11, 15), the computer program comprising program code adapted for removing unused and/or duplicate template data (11, 15) from the document file (100).

11. The computer program of claim 10, wherein the step of removing the unused and/or duplicate of template data (11, 15) is carried out in dependence of a user instruction.

12. The computer program of claim 10, comprising, when the unused and/or duplicate template data (11, 15) is removed from the document file, also removing any further unused data relating to the template data.

13. The computer program of claim 10, comprising, when an object containing template data is imported or copied into the document file, removing the imported or copied template data from the document file if identical template data is already contained in the document file.

14. The computer program of claim 10, comprising, when content data (10) are deleted from the document file, deleting template data (11, 15) relating to the deleted content data (10), if the template data are not employed by any other content data contained in the document file.

15. The computer program of claim 10, wherein the content data consists of user definable data including text, graphics, tables or a data base.

16. The computer program of claim 10, wherein the document file (100) is transferable over a data network.

17. The computer program of claim 10, wherein the template data include formatting data defining a paragraph, object, character or frame style.

18. The computer program of claim 10, wherein the template data includes a background page (15).

19. A computer program product for reducing the file size of a document file (100) comprising content data (10) and template data (11, 15), the computer program comprising program code adapted for removing unused and/or duplicate template data (11, 15) from the document file (100).

20. The computer program product of claim 19, wherein the unused and/or duplicate of template data (11, 15) are removed in dependence of a user instruction.

21. The computer program product of claim 19, comprising, when the unused and/or duplicate template data (11, 15) are removed from the document file, removing any further unused data relating to the template data.

22. The computer program product of claim 19, comprising program code adapted for removing, when an object containing template data is imported or copied into the document file, the imported or copied template data from the document file if identical template data is already contained in the document file.

23. The computer program product of claim 19, comprising program code adapted for removing, when content data (10) are deleted from the document file, template data (11, 15) relating to the deleted content data (10), if the template data are not employed by any other content data contained in the document file.

24. The computer program product of claim 19, wherein the content data consists of user definable data including text, graphics, tables or a data base.

25. The computer program product of claim 19, wherein the document file (100) is transferable over a data network.

26. The computer program product of claim 19, wherein the template data include formatting data defining a paragraph, object, character or frame style.

27. The computer program product of claim 19, wherein the template data includes a background page (15).

28. A software tool for reducing the file size of a computer readable document file (100) comprising content data (10) and template data (11, 15), the software tool providing instructions for removing unused and/or duplicate template data from the document file (100).

29. An apparatus for reducing the file size of a document file (100) comprising content data (10) and template data (11, 15) stored on a storage medium (22, 24), the apparatus comprising a processing unit (20) for removing unused and/or duplicate template data from the document file.

30. A document file (100) comprising content data (10) and template data (11, 15), wherein unused and/or duplicate template data have been removed from the document file.
